# EUROPÄISCHE PATENTSCHRIFT

(11) **EP 2 025 852 B1**
(45) Veröffentlichungstag und Bekanntmachung des Hinweises auf die Patenterteilung: **31.08.2011**
(21) Anmeldenummer: 07018504.6
(22) Anmeldetag: 20.09.2007
(51) Int. Cl.: E05F 15/12, E05F 1/10

(54) **Motorisch angetriebener Linearaktuator**
Powered linear actuator
Actionneur linéaire motorisé

(30) Priorität: 14.08.2007 GB 0715754
(43) Veröffentlichungstag der Anmeldung: 18.02.2009
(73) Patentinhaber: Delphi Technologies, Inc., Troy, Michigan 48007 (US)
(72) Erfinder: Büscher, Hans-Joachim, 40477 Düsseldorf (DE)
(74) Vertreter: Manitz, Finsterwald & Partner GbR

(56) Entgegenhaltungen:
- EP-A- 1 767 439
- DE-A1-102004 044 306
- DE-U1-202005 016 953
- US-A- 3 159 758
- US-A- 5 944 376

## Beschreibung

Die vorliegende Erfindung betrifft einen von einem Elektromotor angetriebenen Linearaktuator gemäß dem Oberbegriff des Anspruchs 1, der die Drehbewegung des Elektromotors in eine translatorische bzw. lineare Bewegung eines Spindeltriebs umsetzt.

Solch ein Linearaktuator ist beispielsweise aus der US 3,159,758 A bekannt geworden.

Derartige Linearaktuatoren können beispielsweise im Bereich der Kraftfahrzeugtechnik zum Einsatz kommen, wo sie beispielsweise zum Öffnen und Schließen von Heckklappen, Kofferraumdeckeln, Motorhauben oder dergleichen Verwendung finden.

Damit beim Öffnen oder Schließen beispielsweise einer Heckklappe nicht das gesamte Gewicht der Heckklappe bewegt bzw. aufgefangen werden muss, kommen üblicherweise Gewichtsausgleichs- oder Gegengewichtsysteme zum Einsatz, die das Gewicht der Heckklappe kompensieren, so dass nur noch eine geringe zusätzliche Kraft zum Öffnen der Heckklappe erforderlich ist, welche entweder von Hand oder mittels eines Betätigungsaktuators aufgebracht werden kann. Beispielsweise kommen bei von Hand betätigbaren Heckklappen als Gegengewichtsystem üblicherweise zwei Gasdruckfedern zum Einsatz, die das Gewicht der Heckklappe kompensieren.

Um den gewünschten Gewichtsausgleich für beispielsweise eine Heckklappe zu schaffen, die von einem motorisch angetriebenen Linearaktuator betätigt wird, kann ein Gewichtsausgleichsystem zum Einsatz kommen, welches entweder in den Linearaktuator integriert oder als separate Einheit vorgesehen ist. Bei separaten Gewichtsausgleichssystemen handelt es sich häufig um gewöhnliche Gasdruckfedern, die den gewünschten Gewichtsausgleich schaffen. Bei integrierten Gewichtsausgleichssystemen handelt es sich hingegen meist um eine in den Linearaktuator integrierte Schraubendruckfeder, die für den gewünschten Gewichtsausgleich sorgt.

Durch die Integration einer derartigen Schraubendruckfeder in den Linearaktuator erhöht sich jedoch zum einen dessen Durchmesser, da die Schraubendruckfeder konzentrisch zu den sich translatorisch bewegenden Teilen des Linearaktuators bzw. dessen Spindeltrieb angeordnet ist. Zum anderen erhöht sich durch die Integration einer derartigen Schraubendruckfeder in den Linearaktuator auch dessen Länge, da die Blocklänge der Schraubendruckfeder nicht als Hubstrecke zur Verfügung steht.

Zwar kann dadurch, dass als Gewichtsausgleichssystem eine Gasdruckfeder in einen Linearaktuator integriert wird, dessen Länge minimiert werden, jedoch weisen derartige Linearaktuatoren, dennoch einen verhältnismäßig großen Durchmesser auf.

Der Erfindung liegt daher die Aufgabe zugrunde, einen möglichst kompakten und kleinbauenden elektromotorisch betätigbaren Linearaktuator anzugeben.

Diese Aufgabe wird mit einem Linearaktuator gelöst, der die Merkmale des Anspruchs 1 aufweist.

Der erfindungsgemäße Linearaktuator weist einen Elektromotor auf, welcher innerhalb des Gehäuses des Linearaktuators befestigt ist und eine ebenfalls in dem Gehäuse angeordnete Gewindespindel antreibt. Die Gewindespindel nimmt eine Spindelmutter auf, welche die Drehbewegung der Gewindespindel in eine translatorische Linearbewegung beispielsweise zum Öffnen oder Schließen einer Heckklappe umsetzt. Um die translatorische Bewegung der Spindelmutter dabei auf eine Heckklappe übertragen zu können, ist mit der Spindelmutter eine sich aus dem Gehäuse herauserstreckende Betätigungsstange gekoppelt. An dem freien Ende der Betätigungsstange sowie an dem gegenüberliegenden Ende des Gehäuses können dabei beispielsweise Befestigungsaugen vorgesehen sein, über die der Linearaktuator an der Karosserie und an der Heckklappe angelenkt werden kann.

Die Gewindespindel weist ein einen Hohlraum der Gewindespindel umschreibendes Innengewinde auf, wohingegen die Spindelmutter ein mit dem Innengewinde der Gewindespindel in Eingriff stehendes Außengewinde aufweist, so dass die Betätigungsstange je nach Drehrichtung der Gewindespindel in den Hohlraum der Gewindespindel ein- oder austeleskopiert wird, wenn die Gewindespindel durch den Elektromotor rotatorisch angetrieben wird.

Anders als herkömmliche Gewindespindeln weist die Gewindespindel des erfindungsgemäßen Linearaktuators also kein Außen- sondern ein Innengewinde auf. In entsprechender Weise weist die zugehörige Spindelmutter anders als zu herkömmlichen Gewindespindeln zugehörige Spindelmuttern kein Innen- sondern ein Außengewinde auf, so dass bei einer Drehung der Gewindespindel die Spindelmutter im Hohlraum der Gewindespindel zu einer Linearbewegung veranlasst wird.

Zwar wäre es ebenfalls möglich, das im Rahmen der vorliegenden Erfindung als Gewindespindel bezeichnete Bauteil aufgrund dessen Innengewindes als lange Spindelmutter zu betrachten und dementsprechend das im Rahmen der vorliegenden Erfindung als Spindelmutter bezeichnete Bauteil aufgrund deren Außengewinde als (kurze) Gewindespindel zu betrachten; da jedoch das im Rahmen der vorliegenden Erfindung als Gewindespindel bezeichnete Bauteil mit Innengewinde durch den Elektromotor einer Drehbewegung unterworfen wird, wohingegen das im Rahmen der vorliegenden Erfindung als Spindelmutter bezeichnete Bauteil durch die Drehbewegung der Gewindespindel einer translatorischen Linearbewegung über die Länge der Gewindespindel hinweg unterworfen wird, orientiert sich die Terminologie für die in Rede stehenden Bauteile in Übereinstimmung mit herkömmlichen Spindeltrieben daran, dass es sich bei dem drehbaren Bauteil um die Gewindespindel handelt, wohingegen das sich infolge der Drehung der Gewindespindel translatorisch bewegende Bauteil die Spindelmutter ist. Bei der Gewindespindel handelt es sich somit in Übereinstimmung mit der üblicherweise verwendeten Terminologie um das längere Bauteil mit einer höheren Anzahl an Gewindegängen, wohingegen es sich bei der Spindelmutter um das kürzere Bauteil mit einer geringeren Anzahl an Gewindegängen handelt.

Zur Betätigung des Linearaktuators wird die Gewindespindel mit Hilfe des Elektromotors und gegebenenfalls einer zwischen den Elektromotor und die Gewindespindel zwischengeschalteten Getriebeeinheit innerhalb des Gehäuses in Drehung versetzt, was infolge des Gewindeeingriffs der Spindelmutter mit der Gewindespindel dazu führt, dass die Spindelmutter zusammen mit der damit gekoppelten Betätigungsstange zu einer translatorischen Linearbewegung veranlasst wird, bei der die Betätigungsstange je nach Drehrichtung der Gewindespindel im Hohlraum derselben ein-oder austeleskopiert wird.

Da es sich bei der Betätigungsstange um den Gasdruckzylinder einer Gasdruckfeder handeln kann, worauf noch genauer eingegangen wird, kann durch die Ausbildung der Gewindespindel eine sehr kompakte Bauform erreicht werden, da innerhalb der Gewindespindel nicht nur die Betätigungsstange sondern auch geeignete Mittel angeordnet sein können, mit denen die Betätigungsstange mit einer Vorspannkraft beaufschlagt werden kann, die die Tendenz hat, ihn aus dem Hohlraum der Gewindespindel herauszudrücken. So wäre es beispielsweise möglich, eine Schraubendruckfeder innerhalb des Hohlraums der Gewindespindel anzuordnen, welche sich einerseits an einer Endfläche der Gewindespindel und andererseits an der Gewindemutter abstützt, um so die gewünschte Vorspannkraft zum Gewichtsausgleich über die Spindelmutter auf die Betätigungsstange aufbringen zu können.

Da sich durch die Blocklänge einer derartigen Schraubendruckfeder jedoch die Gesamtlänge des erfindungsgemäßen Linearaktuators in unerwünschter Weise erhöhen würde, ist es erfindungsgemäß gemäß einer Ausführungsform vorgesehen, die Betätigungsstange in der bereits zuvor angesprochenen Art und Weise als Gasdruckzylinder einer Gasdruckfeder auszubilden, deren Kolbenstange sich ortsfest innerhalb des Hohlraums der Gewindespindel erstreckt. Da bei dieser bevorzugten Ausführungsform innerhalb der Gewindespindel keine Spiraldruckfeder angeordnet ist, steht somit die gesamte Länge der Gewindespindel für die gewünschte Linearbewegung der Spindelmutter bzw. der mit dieser gekoppelten Betätigungsstange zur Verfügung, wodurch sich die Gesamtlänge des Linearaktuators reduzieren lässt.

Da eine Gasdruckfeder in aller Regel lediglich für ca. 30.000 Betätigungszyklen ausgelegt ist, eine Heckklappe jedoch zumindest ca. 50.000 Betätigungszyklen schadfrei überstehen sollte, besteht ein Bedarf danach, den erfindungsgemäßen Linearaktuator derart auszugestalten, dass dessen Gasdruckfeder bestehend aus Gasdruckzylinder und Kolbenstange für Wartungs- oder Reparaturzwecke leicht zugänglich und vorzugsweise austauschbar ist.

Dementsprechend kann die Betätigungsstange erfindungsgemäß gemäß einer anderen Ausführungsform eine hohlzylindrische Gestalt aufweisen, wobei die Betätigungsstange in ihrem Hohlraum den Gasdruckzylinder einer Gasdruckfeder aufnimmt, deren Kolbenstange sich wiederum ortsfest innerhalb des Hohlraums der Gewindespindel erstreckt, wie dies bereits zuvor beschrieben wurde. Die Betätigungsstange des Linearaktuators dient somit gewissermaßen als Gehäuse zur Aufnahme der Gasdruckfeder bzw. deren Gasdruckzylinder, so dass die Gasdruckfeder bei Bedarf leicht ausgetauscht werden kann.

Im Folgenden wird auf bevorzugte Ausführungsformen des erfindungsgemäßen Linearaktuators eingegangen, welche sich aus den Unteransprüchen, der Figurenbeschreibung sowie den Zeichnungen ergeben.

Um einen Austausch der Gasdruckfeder weiter zu vereinfachen, kann der Hohlraum der Betätigungsstange am außerhalb des Gehäuses des Linearaktuators befindlichen Ende der Betätigungsstange durch einen lösbar, vorzugsweise durch einen über eine Gewindeverbindung an der Betätigungsstange angebrachten Verschlusskörper begrenzt sein. Um die Gasdruckfeder austauschen zu können, braucht somit lediglich der genannte Verschlusskörper, bei dem es sich beispielsweise um eine Art Verschlusskappe handeln kann, entfernt bzw. von der Betätigungsstange abgeschraubt werden, so dass der Hohlraum der Betätigungsstange von außen frei zugänglich ist und die zu ersetzende Gasdruckfeder aus dem Hohlraum der Betätigungsstange herausgezogen und eine neue Gasdruckfeder eingeschoben werden kann.

Wie bereits zuvor ausgeführt wurde, kann die hohlzylindrische Gestalt der Gewindespindel bzw. deren Hohlraum an einem Ende durch eine Endfläche begrenzt sein, an der sich die Kolbenstange der Gasdruckfeder abstützt. Zur Aufnahme der Kolbenstange kann hierzu in der Endfläche eine Sacklochausnehmung ausgebildet sein, so dass die Kolbenstange seitlich nicht ausweichen kann. Auf der der Kolbenstange gegenüberliegenden Seite der Endfläche kann diese ferner eine geeignete Eingriffsöffnung beispielsweise ebenfalls in Form einer Sacklochausnehmung aufweisen, in die die Antriebswelle des Elektromotors oder im Falle eines zwischen den Elektromotor und die Gewindespindel zwischengeschalteten Getriebeeinheit deren Abtriebswelle zu Zwecken des Antriebs der Gewindespindel formschlüssig eingreifen kann.

Um unerwünschte Reibungserscheinungen infolge der Drehung der Gewindespindel innerhalb des Gehäuses zu vermeiden, kann die Gewindespindel ferner drehbar in dem Gehäuse über zumindest ein Wälzlager gelagert sein, wodurch gleichzeitig sichergestellt wird, dass die Gewindespindel sich in dem Gehäuse nicht verkantet.

Zwar wäre es grundsätzlich möglich, die Betätigungsstange über ihre gesamte Länge hinweg mit einem Außengewinde auszustatten, welches je nach Betätigungsstellung des Linearaktuators mehr oder weniger weit mit dem Innengewinde der Gewindespindel in Eingriff steht, so dass auf eine definiert abgegrenzte Spindelmutter am im innerhalb des Gehäuses befindlichen Endes der Betätigungsstange verzichtet werden könnte. Allerdings erweist sich die Schmutzabdichtung des Gehäuses des Linearaktautors gegenüber der Betätigungsstange im Falle eines sich über deren gesamte Länge hinweg erstreckenden Außengewindes als problematisch, weshalb es gemäß einer bevorzugten Ausführungsform vorgesehen ist, dass die Betätigungsstange einen glatten umfangsseitigen Schaft aufweist, an deren im Inneren des Gehäuses befindlichen Ende die Spindelmutter ausgebildet ist. Die Spindelmutter und die Betätigungsstange können dabei einstückig miteinander verbunden sein, indem die Betätigungsstange mit der daran angeformten Spindelmutter aus einem einzigen Werkstück herausgearbeitet wird.

Da dieses Herausarbeiten der Spindelmutter und des Schafts der Betätigungsstange aus einem einzigen Werkstück beispielsweise durch Fräsen sehr arbeits- und kostenintensiv ist, kann die Spindelmutter gemäß einer weiteren Ausführungsform lösbar und vorzugsweise über eine Gewindeverbindung mit der Betätigungsstange verbunden sein. Die Spindelmutter und der Schaft der Betätigungsstange können somit separat hergestellt werden und durch eine geeignete Verbindungstechnik wie beispielsweise durch Schrauben miteinander verbunden werden.

Um die Reibung während des Betriebs des erfindungsgemäßen Linearaktuators weiter zu reduzieren, kann die Spindelmutter in Verbindung mit der Gewindespindel als Kugelgewindetrieb ausgebildet sein. Da die Spindelmutter und die Gewindespindel somit lediglich über eine Vielzahl von Kugeln miteinander in Berührung stehen, reduziert sich die Reibung zwischen der Spindelmutter und der Gewindespindel, wodurch weniger Kraft von dem Elektromotor zur Betätigung des Linearaktuators aufgebracht werden muss.

Gemäß einer bevorzugten Ausführungsform kann die Spindelmutter in Verbindung mit der Gewindespindel als Freilaufkugelgewindetrieb (engl.: free wheeling ball screw) ausgebildet sein. Ein derartiger Freilaufkugelgewindetrieb zeichnet sich dadurch aus, dass die Kugeln in ringförmigen Rillen in der Spindelmutter aufgenommen und von einem Käfig zwischen der Spindelmutter und der Gewindespindel aufgenommen werden. Wenn der Käfig der Spindelmutter am Ende der Gewindespindel eine Begrenzung erreicht, hört die Linearbewegung der Spindelmutter auf, da dann die in der Spindelmutter ringförmig umlaufenden Rillen dafür sorgen, dass es zu keiner Vorschubbewegung mehr kommt. Obwohl sich die Gewindespindel weiter dreht, wird somit kein weiterer Druck auf die Begrenzung der Gewindespindel ausgeübt. Diese Ausführungsform erweist sich dabei dahingehend als vorteilhaft, dass durch die Ausbildung der Spindelmutter und der Gewindespindel als Freilaufkugelgewindetrieb im Falle eines Ausfalls der Steuerung des Elektromotors trotz anhaltenden Antriebs des Linearaktuators durch die Spindelmutter keine weitere Linearbewegung mehr hervorgerufen wird, wodurch die Gefahr einer Überhitzung des Elektromotors verringert werden kann.

Im Folgenden wird nun die Erfindung rein exemplarisch anhand unterschiedlicher, beispielhafter Ausführungsformen unter Bezugnahme auf die beigefügten Zeichnungen beschrieben, wobei:
- Fig. 1: eine schematische Darstellung einer ersten Ausführungsform eines erfindungsgemäßen Linearaktuators zeigt;
- Fig. 2: eine schematische Darstellung einer zweite Ausführungsform eines erfindungsgemäßen Linearaktuators im Bereich der Be- tätigungsstange zeigt; und
- Fig. 3: eine schematische Darstellung einer dritten Ausführungsform eines erfindungsgemäßen Linearaktuators im Bereich der Be- tätigungsstange zeigt.

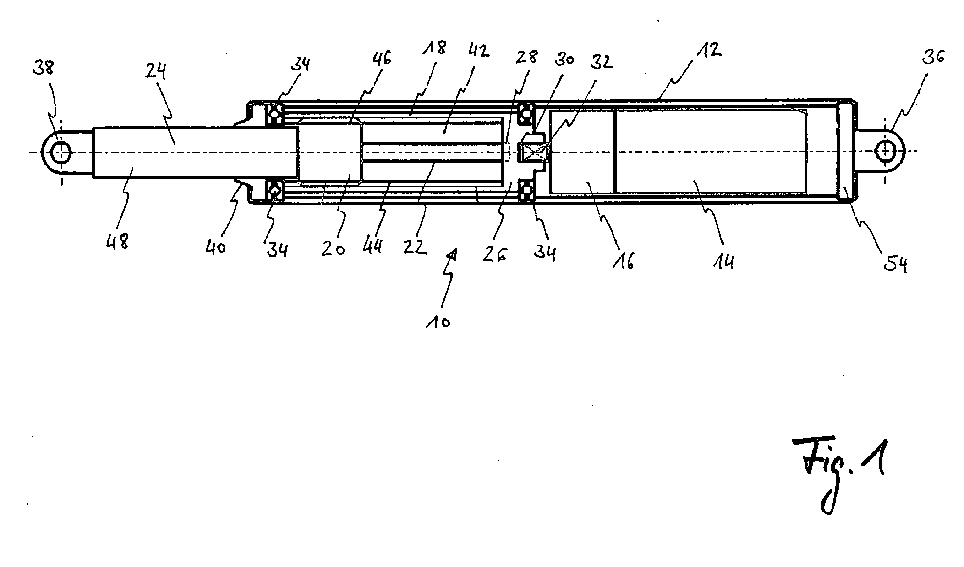

Die Fig. 1 zeigt eine erste Ausführungsform eines Linearaktuators 10, bei der die Betätigungsstange 24 gleichzeitig der Gasdruckzylinder 48 einer Gasdruckfeder 24, 22 ist. Der in der Fig. 1 dargestellte Linearaktuator 10 weist ein im Wesentlichen hohlzylindrisches Gehäuse 12 auf, in dem ein mit einem Getriebe 16 gekoppelter Elektromotor 14 fest angeordnet ist.

Darüber hinaus ist in dem Gehäuse 12 eine Gewindespindel 18 angeordnet, welche über zwei beabstandet zueinander angeordnete Wälzlager 34 im Inneren des Gehäuses 12 an dessen Innenwandung gelagert ist. Bei der Gewindespindel 18 handelt es sich um ein im Wesentlichen hohlzylindrisches Bauteil, welches konzentrisch zu dem Gehäuse 12 des Linearaktuators 10 angeordnet ist. Die Gewindespindel 18 bildet somit einen Hohlraum 42 aus, wobei an der den Hohlraum 42 umgebenden Innenwandung der Gewindespindel 18 ein Innengewinde 44 ausgebildet ist.

Auf der dem Getriebe 16 zugewandten Seite ist der Hohlraum 42 der Gewindespindel 18 durch eine Endfläche 26 in Form einer Wand begrenzt. Diese Wand 26 weist dabei auf der dem Getriebe 16 zugewandten Seite eine Eingriffsausnehmung in Form einer Sacklochausnehmung 30 auf, in die die Abtriebswelle 32 des Getriebes 16 formschlüssig eingreift, um die Gewindespindel 18 rotatorisch antreiben zu können.

Darüber hinaus weist der Linearaktuator 10 eine Spindelmutter 20 auf, welche sich in dem Hohlraum 42 der Gewindespindel 18 befindet. Die Spindelmutter 20 ist an ihrem Außenumfang mit einem Außengewinde 46 versehen, welches mit dem Innengewinde 44 der Gewindespindel 18 in Eingriff steht, so dass die Spindelmutter 20 je nach Drehrichtung der Gewindespindel 18 in Längsrichtung der Gewindespindel 18 nach vorne oder nach hinten geschraubt wird.

Mit der Spindelmutter 20 ist eine Betätigungsstange 24 gekoppelt, welche sich durch eine mit einem Dichtelement 40 versehene Austrittsöffnung des Gehäuses 12 aus demselben heraus erstreckt.

Die von dem Elektromotor 14 hervorgerufene Drehbewegung wird über das Getriebe 16 und insbesondere dessen Abtriebswelle 32 auf die Gewindespindel 18 übertragen, welche in Verbindung mit der im Hohlraum 42 derselben befindlichen Spindelmutter 20 die Drehbewegung in eine translatorische Linearbewegung der Spindelmutter 20 umsetzt, so dass die Betätigungsstange 24 je nach Drehrichtung der Gewindespindel 18 in den Hohlraum 42 der Gewindespindel 18 ein- oder austeleskopiert wird.

Bei dieser Betätigung des Linearaktuators 10 wird lediglich die Gewindespindel 18 dazu veranlasst, eine Drehbewegung auszuführen, wohingegen die Spindelmutter 20 keine Drehbewegung ausführt. Die Spindelmutter 20 wird infolge des Gewindeeingriffs mit dem Innengewinde 44 der Gewindespindel 18 vielmehr lediglich in Längsrichtung der Gewindespindel 18 vor- oder zurückbewegt, um die Betätigungsstange 24 in das Gehäuse 12 bzw. den Hohlraum 42 der Gewindespindel 18 ein- oder austeleskopieren zu können.

Um die Linearbewegung des Linearaktuators 10 zum Öffnen und/oder Schließen beispielsweise einer Heckklappe eines Kraftfahrzeugs verwenden zu können, weist der erfindungsgemäße Linearaktuator 10 an seinen zwei gegenüberliegenden Enden jeweils ein Befestigungsauge 36, 38 auf, wobei das eine Befestigungsauge 38 am frei auskragenden Ende der Betätigungsstange 24 ausgebildet ist, wohingegen das andere Befestigungsauge 36 an einem lösbar an dem Gehäuse 12 angebrachten Verschlussdeckel 54 ausgebildet ist, welcher zu Revisions- oder Reparaturzwecken von dem Gehäuse 12 entfernt werden kann.

Damit die zum Öffnen beispielsweise einer Heckklappe benötigte Kraft nicht ausschließlich von dem Elektromotor 14 aufgebracht werden muss, kann die Betätigungsstange 24 unter einer Vorspannkraft stehen, die die Tendenz hat, die Betätigungsstange 24 aus dem Hohlraum 42 der Gewindespindel 18 herauszudrücken. Eine derartige Vorspannkraft könnte beispielsweise auf die Betätigungsstange 24 bzw. die damit gekoppelte Spindelmutter 20 über eine in dem Hohlraum 42 befindliche Schraubendruckfeder erzeugt werden, welche sich einerseits an der Spindelmutter 20 und andererseits an der Endfläche 26 abstützt.

Da jedoch in diesem Falle aufgrund der Blocklänge einer derartig angeordneten Schraubendruckfeder nicht die gesamte Länge der Gewindespindel 18 als Hubstrecke für die Spindelmutter 20 und die Betätigungsstange 24 zur Verfügung stehen würde, ist es gemäß einer bevorzugten Ausführungsform vorgesehen, die genannte Vorspannkraft mit Hilfe einer Gasdruckfeder aufzubringen. Dementsprechend ist die Betätigungsstange 24 bei dieser bevorzugten Ausführungsform als Gasdruckzylinder 48 einer Gasdruckfeder ausgebildet, deren Kolbenstange 22 sich ortsfest und konzentrisch innerhalb des Hohlraums 42 der Gewindespindel 18 erstreckt, wie dies bei der in der Fig. 1 dargestellten Ausführungsform der Fall ist. An dem der Spindelmutter 20 gegenüberliegenden Ende der Kolbenstange 22 greift die Kolbenstange 22 dabei in eine in der Endfläche 26 ausgebildete Sacklochausnehmung 28 ein. Die Kolbenstange 22 bildet somit in Verbindung mit der als Gasdruckzylinder 48 ausgebildeten Betätigungsstange 24 eine Gasdruckfeder, welche aufgrund der unterschiedlich großen druckwirksamen Flächen beiderseits des (hier nicht dargestellten) Kolbens innerhalb des Gasdruckzylinders 24 die Tendenz hat, den Gasdruckzylinder 24 aus dem Hohlraum 42 der Gewindespindel 28 herauszudrücken.

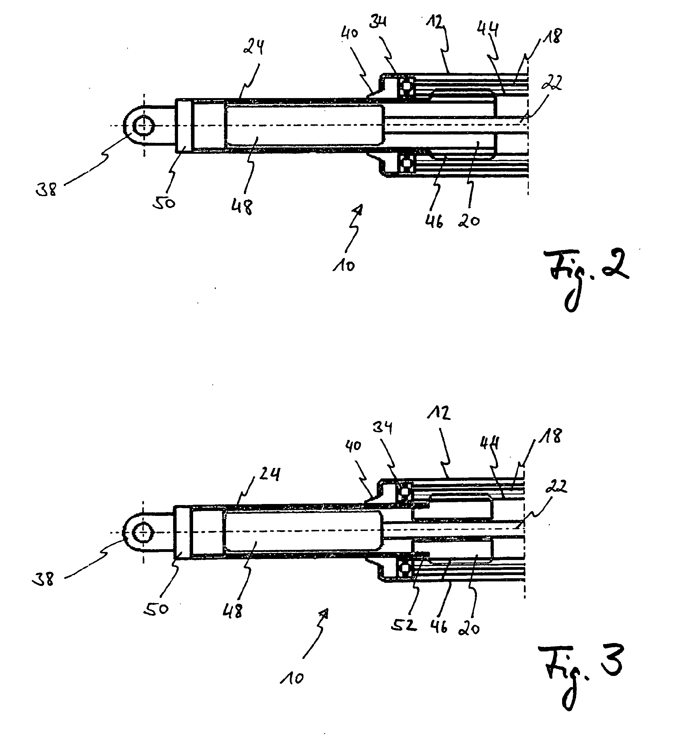

Um die Gasdruckfeder bestehend aus Gasdruckzylinder 48 und Kolbenstange 22 möglichst schnell und einfach austauschen zu können, ist es gemäß einer anderen Ausführungsform, welche in der Fig. 2 dargestellt ist, vorgesehen, den Gasdruckzylinder 48 als ein von der Betätigungsstange 24 separates Bauteil auszubilden. Wie der Fig. 2 entnommen werden kann, weist auch bei dieser Ausführungsform die Betätigungsstange 24 eine hohlzylindrische Gestalt auf, wobei bei dieser Ausführungsform jedoch die Betätigungsstange 24 in ihrem Hohlraum den Gasdruckzylinder 48 einer Gasdruckfeder aufnimmt, deren Kolbenstange 22 sich ortsfest und konzentrisch innerhalb des Hohlraums 42 der Gewindespindel erstreckt. Der Gasdruckzylinder 48 ist dabei von außen her über einen am freien Ende der Betätigungsstange 24 lösbar angebrachten Verschlusskörper 50 leicht zugänglich, so dass die Gasdruckfeder 48, 22 ohne weiteres aus dem Hohlraum der Betätigungsstange 24 herausgezogen werden kann, nachdem der Verschlusskörper 50 von der Betätigungsstange 24 entfernt wurde.

Bei den beiden in den Fig. 1 und 2 dargestellten Ausführungsformen ist die Spindelmutter 20 einstückig mit der Betätigungsstange 24 verbunden. In produktionstechnischer Hinsicht kann es sich jedoch als vorteilhaft erweisen, die Spindelmutter 22 als separates Bauteil zu fertigen und erst nachträglich mit der Betätigungsstange 24 zu verbinden. So kann beispielsweise die Spindelmutter 20 über eine Gewindeverbindung 52 gemäß Fig. 3 lösbar mit der Betätigungsstange 24 verbunden sein, so dass auch im Falle, dass abweichend von der Fig. 2 die Gasdruckfeder bzw. deren Gasdruckzylinder 48 nicht als ein von der Betätigungsstange 24 separates Bauteil ausgeführt sein sollte, die als Gasdruckzylinder 48 ausgebildete Betätigungsstange 24 (gemäß Fig. 1) leicht ausgetauscht werden kann.

### Bezugszeichenliste

- 10: Linearaktuator
- 12: Gehäuse
- 14: Elektromotor
- 16: Getriebe
- 18: Gewindespindel
- 20: Spindelmutter
- 22: Kolbenstange
- 24: Betätigungsstange
- 26: Endfläche/Wand
- 28: Sacklochausnehmung
- 30: Sacklochausnehmung
- 32: Antriebswelle
- 34: Wälzlager
- 36: Befestigungsauge
- 38: Befestigungsauge
- 40: Dichtung
- 42: Hohlraum von 18
- 44: Innengewinde
- 46: Außengewinde
- 48: Gasdruckzylinder
- 50: Verschlusskörper
- 52: Gewindeverbindung
- 54: Verschlussdeckel

## Patentansprüche

1. Linearaktuator (10) umfassend:
- ein Gehäuse (12);
- einen in dem Gehäuse (12) befestigten Elektromotor (14);
- eine in dem Gehäuse (12) angeordnete, von dem Elektromotor (14) drehbar angetriebene Gewindespindel (18);
- eine von der Gewindespindel (18) aufgenommene Spindelmutter (20), die die Drehbewegung der Gewindespindel (18) in eine translatorische Bewegung umsetzt; und
- eine sich aus dem Gehäuse (12) herauserstreckende Betätigungsstange (24), die mit der Spindelmutter (20) gekoppelt ist;
wobei die Gewindespindel (18) ein einen Hohlraum (42) der Gewindespindel (18) umschreibendes Innengewinde (44) und die Spindelmutter (20) ein mit dem Innengewinde (44) der Gewindespindel (18) in Eingriff stehendes Außengewinde (46) aufweist, so dass die Betätigungsstange (24) je nach Drehrichtung der Gewindespindel (18) in den Hohlraum (42) der Gewindespindel (18) ein- oder austeleskopierbar ist;
**dadurch gekennzeichnet, dass**
entweder die Betätigungsstange (24) der Zylinder (48) einer Gasdruckfeder list, deren Kolbenstange (22) sich ortfest innerhalb des Hohlraums (42) der Gewindespindel (18) erstreckt; oder dass die Betätigungsstange (24) eine hohlzylindrische Gestalt aufweist, wobei die Betätigungsstange (24) in ihrem Hohlraum den Zylinder (48) einer Gasdruckfeder aufnimmt, deren Kolbenstange (22) sich ortfest innerhalb des Hohlraums (42) der Gewindespindel (18) erstreckt.

2. Linearaktuator nach Anspruch 1,
**dadurch gekennzeichnet, dass**
die Betätigungsstange (24) unter einer Vorspannkraft steht, die Tendenz hat, sie aus dem Hohlraum (42) der Gewindespindel (18) herauszudrücken.

3. Linearaktuator nach Anspruch 1,
**dadurch gekennzeichnet, dass**
der Hohlraum der Betätigungsstange (24) am außerhalb des Gehäuses (12) befindlichen Ende der Betätigungsstange (24) durch einen lösbar, insbesondere durch eine über eine Gewindeverbindung an der Betätigungsstange (24) angebrachten Verschlusskörper (50) begrenzt ist.

4. Linearaktuator nach Anspruch 1 oder 3,
**dadurch gekennzeichnet, dass**
die Gewindespindel (18) eine hohlzylindrische Gestalt aufweist, deren Hohlraum (42) an einem Ende durch eine Wand (26) begrenzt ist, an der sich die Kolbenstange (22) abstützt.

5. Linearaktuator nach zumindest einem der vorstehenden Ansprüche,
**dadurch gekennzeichnet, dass**
die Gewindespindel (18) drehbar in dem Gehäuse (12) gelagert ist.

6. Linearaktuator nach zumindest einem der vorstehenden Ansprüche,
**dadurch gekennzeichnet, dass**
die Spindelmutter (20) lösbar, insbesondere über eine Gewindeverbindung (52) mit der Betätigungsstange (24) verbunden ist.

7. Linearaktuator nach zumindest einem der vorstehenden Ansprüche,
**dadurch gekennzeichnet, dass**
die Spindelmutter (20) einstückig mit der Betätigungsstange (24), insbesondere an deren im Inneren des Gehäuses (12) befindlichen Ende ausgebildet ist.

8. Linearaktuator nach zumindest einem der vorstehenden Ansprüche,
**dadurch gekennzeichnet, dass**
die Spindelmutter (20) in Verbindung mit der Gewindespindel (18) als Kugelgewindetrieb und insbesondere als Freilaufkugelgewindetrieb ausgebildet ist.

## Claims

1. A linear actuator (10) comprising:
- a housing (12);
- an electric motor (14) fixed in the housing (12);
- a threaded spindle (18) arranged in the housing (12) and rotatably driven by the electric motor (14);
- a spindle nut (20) which is received by the threaded spindle (18) and converts the rotary movement of the threaded spindle (18) into a translatory movement; and
- an actuation bar (24) which extends out of the housing (12) and is coupled to the spindle nut (20),
wherein the threaded spindle (18) has an internal thread (44) which circumscribes a hollow space (42) of the threaded spindle (18) and the spindle nut (20) has an external thread (46) in engagement with the internal thread (44) of the threaded spindle (18) so that the actuation bar (24) can be moved in and out of the hollow space (42) of the threaded spindle (18) in the manner of a telescope depending on the direction of rotation of the threaded spindle (18),
**characterized in that**
either the actuation bar (24) is the cylinder (48) of a pressurized gas spring whose piston rod (22) extends in a fixed position within the hollow space (42) of the threaded spindle (18); or **in that** the actuation bar (24) has a hollow cylindrical design, with the actuation bar (24) receiving in its hollow space the cylinder (48) of a pressurized gas spring whose piston rod (22) extends at a fixed position within the hollow space (42) of the threaded spindle (18).

2. A linear actuator in accordance with claim 1, **characterized in that** the actuation bar (24) is under a biasing force which has the tendency to press it out of the hollow space (42) of the threaded spindle (18).

3. A linear actuator in accordance with claim 1, **characterized in that** the hollow space of the actuation bar (24) is bounded at the end of the actuation bar (24) located outside of the housing (12) by a closing body (50) releasably attached to the actuation bar (24), in particular by a threaded connection.

4. A linear actuator in accordance with claim 1 or claim 3, **characterized in that** the threaded spindle (18) has a hollow cylindrical design whose hollow space (42) is bounded at one end by a wall (26) at which the piston rod (22) is supported.

5. A linear actuator in accordance with at least one of the preceding claims, **characterized in that** the threaded spindle (18) is rotatably supported in the housing (12).

6. A linear actuator in accordance with at least one of the preceding claims, **characterized in that** the spindle nut (20) is releasably connected to the actuation bar (24), in particular via a threaded connection (52).

7. A linear actuator in accordance with at least one of the preceding claims, **characterized in that** the spindle nut (20) is made in one piece with the actuation rod (24), in particular at its end located in the interior of the housing (12).

8. A linear actuator in accordance with at least one of the preceding claims, **characterized in that** the spindle nut (20) is made in conjunction with the threaded spindle (18) as a ball screw and in particular as a free wheeling ball screw.

## Revendications

1. Actionneur linéaire (10) comprenant :
- un boîtier (12) ;
- un moteur électrique (14) fixé dans le boîtier (12) ;
- une broche filetée (18) agencée dans le boîtier (12) et entraînée en rotation par le moteur électrique (14) ;
- un écrou (20) reçu par la broche filetée (18) et convertissant le mouvement de rotation de la broche filetée (18) en un mouvement de translation ; et
- une tige d'actionnement (24) qui s'étend hors du boîtier (12) et qui est couplée à l'écrou (20) ;
dans lequel la broche filetée (18) comprend un pas de vis intérieur (44) qui circonscrit une cavité (42) de la broche filetée (18) et l'écrou (20) comprend un pas de vis extérieur (46) en engagement avec le pas de vis intérieur (44) de la broche filetée (18), de sorte que, selon le sens de rotation de la broche filetée (18), la tige d'actionnement (24) peut être rentrée ou sortie de manière télescopique dans la cavité (42) de la broche filetée (18) ;
**caractérisé en ce que**
soit la tige d'actionnement (24) est le cylindre (48) d'un ressort à gaz sous pression dont la tige de piston (22) s'étend de manière stationnaire à l'intérieur de la cavité (42) de la broche filetée (18) ;
soit la tige d'actionnement (24) présente une configuration cylindrique creuse, de sorte que la tige d'actionnement (24) reçoit dans sa cavité le cylindre (48) d'un ressort à gaz sous pression dont la tige de piston (22) s'étend de manière stationnaire à l'intérieur de la cavité (42) de la broche filetée (18).

2. Actionneur linéaire selon la revendication 1,
**caractérisé en ce que** la tige d'actionnement (24) se trouve sous une force de précontrainte qui a tendance à la forcer hors de la cavité (42) de la broche filetée (18).

3. Actionneur linéaire selon la revendication 1,
**caractérisé en ce que** la cavité de la tige d'actionnement (24) est limitée, à l'extrémité de la tige d'actionnement (24) qui se trouve à l'extérieur du boîtier (12), par un corps obturateur (50) monté de façon détachable sur la tige d'actionnement (24), en particulier via une liaison vissée.

4. Actionneur linéaire selon la revendication 1 ou 3,
**caractérisé en ce que** la broche filetée (18) présente une configuration cylindrique creuse, dont la cavité (42) est limitée à une extrémité par une paroi (26) contre laquelle s'appuie la tige de piston (22).

5. Actionneur linéaire selon l'une au moins des revendications précédentes,
**caractérisé en ce que** la broche filetée (18) est montée avec possibilité de rotation dans le boîtier (12).

6. Actionneur linéaire selon l'une au moins des revendications précédentes,
**caractérisé en ce que** l'écrou (20) est relié de façon détachable à la tige d'actionnement (24), en particulier via une liaison vissée (52).

7. Actionneur linéaire selon l'une au moins des revendications précédentes,
**caractérisé en ce que** l'écrou (20) est réalisé d'une seule pièce avec la tige d'actionnement (24), en particulier à son extrémité qui se trouve à l'intérieur du boîtier (12).

8. Actionneur linéaire selon l'une au moins des revendications précédentes,
**caractérisé en ce que** l'écrou (20) en liaison avec la broche filetée (18) est réalisé sous forme de mécanisme à vis à recirculation de billes, et en particulier sous forme de mécanisme à vis à recirculation de billes en déplacement libre.
